# EUROPÄISCHE PATENTSCHRIFT

(11) **EP 4 303 971 B1**
(45) Veröffentlichungstag und Bekanntmachung des Hinweises auf die Patenterteilung: **29.01.2025**
(21) Anmeldenummer: 23176723.7
(22) Anmeldetag: 01.06.2023
(51) Int. Cl.: H01M 8/0297, H01M 8/10

(54) **VERFAHREN UND VORRICHTUNG ZUM AUSHÄRTEN EINES KLEBSTOFFS ZWISCHEN ELEKTRODEN-LAGEN EINES ELEKTRODEN-STAPELS**
METHOD AND DEVICE FOR HARDENING AN ADHESIVE BETWEEN ELECTRODE LAYERS OF AN ELECTRODE STACK
PROCÉDÉ ET DISPOSITIF POUR DURCIR UN ADHÉSIF ENTRE DES COUCHES D'ÉLECTRODES D'UN EMPILEMENT D'ÉLECTRODES

(30) Priorität: 04.07.2022 DE 102022116561
(43) Veröffentlichungstag der Anmeldung: 10.01.2024
(73) Patentinhaber: MB Automation GmbH & Co. KG, 93426 Roding (DE)
(72) Erfinder: Hochmann, Sven, 01259 Dresden (DE)
(74) Vertreter: Schmidt, Steffen J.

(56) Entgegenhaltungen:
- DE-A1- 102010 055 075
- DE-A1- 102012 014 756
- DE-A1- 102020 006 845

## Beschreibung

### Hintergrund

Hier werden ein Verfahren und eine Vorrichtung zum Aushärten eines Klebstoffs zwischen Lagen eines Elektroden-Stapels beschrieben. Der Elektroden-Stapel kann zur Herstellung einer Membran-Elektroden-Anordnung, MEA, dienen. Die MEA kann eine Gasdiffusionsschicht, GDL, umfassen, insbesondere eine Anodenschicht oder eine Kathodenschicht in Form einer GDL. Weiter kann die MEA eine, insbesondere katalysatorbeschichtete, Membran, CCM, umfassen. Des Weiteren kann die MEA einen Klebstoff, der bereichsweise, z.B. an einem oder allen Rändern, zwischen den Elektroden-Lagen des MEAs aufgetragen ist, aufweisen. Details hierzu sind in den Ansprüchen definiert; auch die Beschreibung und die Zeichnung enthalten relevante Angaben zum System und zur Funktionsweise sowie zu Varianten des Systems.

### Stand der Technik

Für eine einwandfreie Funktion von modernen Brennstoffzellen bspw. Protonenaustauschmembran-Brennstoffzellen ist die Qualität der verbauten Membran-Elektroden-Anordnung/ Elektroden-Stapel von großer Bedeutung. Dazu muss der Prozess der Verklebung der mehreren Lagen des Elektroden-Stapels und das darauffolgende Aushärten möglichst schonend von statten gehen. Dabei sollte nur der Bereich des Elektroden Stapels mit Wärme beaufschlagt werden, der mit der Klebstofffläche zwischen den Lagen des Elektroden-Stapels korrespondiert. Andererseits wird das Innere des Elektroden-Stapels erwärmt, was zu einer hohen mechanischen Spannung führt und damit die Klebeverbindungen beeinträchtigen kann. Dies wird im Stand der Technik dadurch gelöst, dass die nicht zu erwärmenden Bereiche von den zu erwärmenden Bereichen abgeschirmt werden. Dies ist umständlich und mit einem erhöhten Zeitaufwand für den Aushärteprozess verbunden.

Das Dokument WO 2015/016974 A1 offenbart die Herstellung und Montage von Batterien mit Kühleigenschaften für teilelektrisierte Fahrzeugen wie bspw. Hybrid-Fahrzeugen.

Aus dem Dokument DE 10 2022 116 561.2 ist ein Verfahren und eine Vorrichtung bekannt, um die Bestandteile von Brennstoffzellen zu laminieren. Die zentrale Einheit zum Heißpressen besteht dabei aus einem Rotationskörper oder Plattenwerkzeug, das partiell erhitzt oder gekühlt werden kann.

Das Dokument DE 10 2010 054 199 A1 offenbart ein Verfahren zur Herstellung einer Membran-Elektroden-Anordnung für eine Brennstoffzelle. Die dazu nötigen Komponenten werden als Rollware und/oder als Einzelteile einer Laminiereinheit derart zugeführt, dass die Komponenten kontinuierlich laminiert werden.

Das Dokument DE 10 2015 224 030 A1 offenbart eine Warmpresseinrichtung und ein Warmpressverfahren einer Membran-Elektroden-Anordnung. Die Membran-Elektroden-Anordnung wird zwischen heißen Platten warmgepresst. Hierbei werden die gesamten Platten geheizt und der Gesamtvorgang des Zusammenführens und Warmpressens erfolgt diskontinuierlich.

Aus der DE 10 2012 014 756 A1 sind ein Verfahren und eine Vorrichtung zum Verbinden zumindest zweier Bestandteile einer Brennstoffzelle bekannt. Der verwendete Klebstoff wird mittels eines Siebdruckverfahrens auf einen Bereich aufgebracht und anschließend bestrahlt.

Aus der DE 10 2020 006 845 A1 sind ein Verfahren und eine Vorrichtung zur Herstellung einer Membran-Elektroden-Anordnung bekannt. Auf einen Trägerahmen wird ein Haftmittelbelag aufgebracht. Auf den aufgebrachten Haftmittelbelag wird eine erste Elektrode aufgebracht.

Aus der DE 10 2010 055 075 A1 ist ein Verfahren zur Herstellung einer Bipolarplatte sowie einer Bipolarplatte für Brennstoffzellen bekannt. Zwischen Anoden- und Kathodenplatte wird ein Klebstoff eingebracht, dessen Adhäsion mit der Berührung der Anoden und/oder Kathodenplatte automatisch aktiviert wird.

### Zu lösende Aufgabe

Daher besteht der Bedarf für ein weniger umständliches, weniger zeitaufwendiges und kontinuierliches Verfahren und eine entsprechende Vorrichtung zum Aushärten eines Klebstoffs zwischen den Elektroden-Lagen einer MEA oder eines Elektroden-Stapels.

### Lösung

Diese Aufgabe wird durch ein Verfahren nach dem Anspruch 1 sowie durch eine Vorrichtung nach den unabhängigen Vorrichtungsansprüchen 2 und 14 gelöst. Ausgestaltungen dieser Lösungen werden durch die auf diese Ansprüche zurückbezogenen Ansprüche definiert.

Die vorliegende Erfindung erwärmt nur den Bereich eines MEAs/Elektroden-Stapels, der mit einem Klebstoff zwischen den Elektroden-Lagen des Elektroden-Stapels korrespondiert. Die Bereiche des MEAs/Elektroden-Stapels, die nicht mit einem Klebstoff zwischen den Elektroden-Lagen korrespondieren, also die Bereiche ohne Klebstoff, können gekühlt werden.

Ein Verfahren zum Aushärten eines Klebstoffs zwischen Elektroden-Lagen eines Elektroden-Stapels umfasst die Schritte:
- Bereitstellen eines Elektroden-Stapels mit mehreren Elektroden-Lagen, zwischen denen zumindest bereichsweise wenigstens ein Klebstoff angeordnet ist;
- Aufnehmen des Elektroden-Stapels mit einer Transporteinrichtung;
- Fördern des aufgenommenen Elektroden-Stapels durch die Transporteinrichtung entlang eines Förderwegs zu einer Aushärtestation;
- Bereitstellen eines Stempels der zonenweise temperiert werden kann und der dazu eingerichtet ist, einen von der Transporteinrichtung aufgenommenen Elektroden-Stapel an die Transporteinrichtung zu pressen;
- Fördern des durch die Transporteinrichtung aufgenommenen Elektroden-Stapels durch die Aushärtestation hindurch, und Aushärten des Klebstoffs zwischen den mehreren Elektroden-Lagen in der Aushärtestation;
- Entfernen des Stempels von dem Elektroden-Stapel; und
- Entfernen des Elektroden-Stapels aus der Transporteinrichtung.

Ein Vorteil dieses Verfahrens ist, dass der Elektroden-Stapel spannungsfrei und kontinuierlich gefördert und währenddessen ausgehärtet werden kann. Während des Förderns erfährt der Elektroden-Stapel keine oder kaum (Zug- oder Spann-) Kräfte. Der Stempel kann zonenweise temperiert werden, womit auch nur Kontaktflächen oder Bereiche zwischen dem Stempel und dem Elektroden-Stapel temperiert werden, die mit Temperierzonen des Stapels korrespondieren und/oder in Kontakt stehen. Dies mindert während des Temperierens und des Aushärtens die mechanische Belastung der Klebeverbindung und der Elektroden als Ganzes. Ein umständliches Abschirmen von Elektroden-Stapel-Oberflächenbereichen, die nicht temperiert werden sollen, entfällt.

In einer Variante kann die Anordnung/Entfernung des Stempels auf/von, den/dem Elektroden-Stapel vor der Aushärtestation, insbesondere stromaufwärts der Aushärtestation, oder während des Förderns durch die Aushärtestation; oder nach der Aushärtestation, insbesondere stromabwärts der Aushärtestation, stattfinden.

Optional kann die Aushärtestation einen Aushärtestations-Eingang und einen Aushärtestations-Ausgang aufweisen. Durch den Aushärtestations-Eingang kann die Transporteinrichtung mit dem aufgenommenen Elektroden-Stapel der Aushärtestation zugeführt werden, und durch den Aushärtestations-Ausgang kann die Transporteinrichtung mit dem erwärmten/ausgehärteten Elektroden-Stapel aus der Aushärtestation gefördert werden.

In einer Variante kann das Aushärten des aufgenommenen Elektroden-Stapels während des Förderns der Transporteinrichtung durch die Aushärtestation, insbesondere im Moment der Zufuhr der Transporteinrichtung in die Aushärtestation, beginnen. Optional kann das Aushärten mit Anordnung/Auflegen des Stempels auf den Elektroden-Stapel oder mit Zufuhr des Elektroden-Stapels in die Transporteinrichtung beginnen.

Eine Vorrichtung zum Aushärten eines Klebstoffs zwischen Elektroden-Lagen eines Elektroden-Stapels umfasst:
- zumindest eine Transporteinrichtung mit einer Palette, die dazu eingerichtet ist, einen Elektroden-Stapel aufzunehmen und zu entfernen oder abzugeben;
- zumindest einen Stempel, der dazu bestimmt und eingerichtet ist, den durch die Transporteinrichtung aufgenommenen Elektroden-Stapel an die Palette anzupressen;
- eine Fördereinrichtung, die dazu bestimmt und eingerichtet ist, die zumindest eine Transporteinrichtung aufzunehmen und entlang einer Förderrichtung zu fördern;
- eine Aushärtestation, die eine Temperiereinheit umfasst, wobei die Aushärtestation entlang der Fördereinrichtung angeordnet ist, und die dazu bestimmt und eingerichtet ist, einen Klebstoff auszuhärten; wobei
- eine Stempelfläche des Stempels zumindest eine Stempelkühlzone und/oder zumindest eine Stempelwärmzone aufweist, und wobei beim Anpressen des Stempels eine Wärmekontaktfläche und/oder Kühlkontaktfläche mit dem Elektroden-Stapel entsteht.

Diese Vorrichtung erlaubt das Aushärten in einem kontinuierlichen Förder-Prozess. Des Weiteren erfolgt die Erwärmung des Stempels zonenweise. Das bedeutet, dass Teile der Elektroden-Stapel-Oberfläche erwärmt oder/und andere Teile der Elektroden-Stapel-Oberfläche gekühlt werden können. Dies mindert die mechanischen Belastungen der Klebeverbindungen und an den Bereichen des Elektroden-Stapels während des Aushärtens. Ein umständliches Abschirmen der nicht zu erwärmenden/nicht auszuhärtenden Bereiche des Elektroden-Stapels entfällt.

Optional kann die Ausdehnung/Dimension der Stempelfläche der Ausdehnung/Dimension einer Elektroden-Stapel-Oberfläche und/oder der Palette entsprechen. Des Weiteren kann die Ausdehnung/Dimension der Stempelfläche kleiner sein als die Ausdehnung/Dimension der Palette. Des Weiteren kann der Stempel, insbesondere die Stempelfläche, einen Stempelflächenrand aufweisen. Optional kann die Stempelfläche erhabene und/oder vertiefte Stempelflächenbereiche aufweisen. Die erhabenen und/oder vertieften Stempelflächenbereiche können derart ausgestaltet sein, dass der Stempelflächenrand als ein erhabener Stempelflächenbereich ausgebildet ist. Optional kann der erhabene Stempelflächenbereich mit einem Klebstoff zwischen den Elektroden-Lagen eines Elektroden-Stapels korrespondieren. Ferner kann der erhabene Stempelflächenbereich mit den Stempelwärmzonen übereinstimmen. Die vertieften Stempelflächenbereiche können mit den Stempelkühlzonen übereinstimmen. Ferner kann die Dimension/Ausdehnung der Stempelfläche größer sein als die Ausdehnung/Dimension des Elektroden-Stapels. Der erhabene Stempelrand kann den Elektroden-Stapel umfassen/umranden, sodass der Stempelrand zumindest eine Seitenfläche des Elektroden-Stapels wenigstens teilweise kontaktiert.

Die Transporteinrichtung kann einen geöffneten und einen geschlossenen Zustand einnehmen. Der geschlossene Zustand kann dadurch gekennzeichnet sein, dass der Stempel, insbesondere die Stempelfläche und/oder die Stempelwärmzone, plan / planparallel / parallel / vollständig / vollflächig auf dem aufgenommenen Elektroden-Stapel aufliegt und/oder ihn umgibt / umfasst oder den Elektroden-Stapel vollflächig gegen die Palette presst. Der geöffnete Zustand kann dadurch gekennzeichnet sein, dass der Stempel, insbesondere die Stempelfläche und / oder die Stempelwärmzone, nicht plan / planparallel / parallel / vollständig / vollflächig auf dem aufgenommenen Elektroden-Stapel aufliegt und/oder ihn nicht umgibt / umfasst und / oder den Elektroden-Stapel nicht vollflächig gegen die Palette presst.

Die Transporteinrichtung kann einen Eingabezustand und/oder Ausgabezustand einnehmen. Der Eingabezustand und/oder der Ausgabezustand kann dadurch definiert sein, dass der, insbesondere zugeordnete, Stempel einen Lagezustand gegenüber der Palette und/oder dem Elektroden-Stapel einnimmt, sodass der Elektroden-Stapel senkrecht von/auf, der/die Palette und/oder Transporteinrichtung entfernt/angeordnet werden kann. Optional kann der Eingabe- und Ausgabezustand derselbe Zustand sein.

Der Eingabezustand/Ausgabezustand und/oder der geöffnete/geschlossene Zustand kann mittels einer mechanischen, insbesondere elektromechanischen, und/oder pneumatischen, insbesondere elektropneumatischen und/oder hydraulischen, insbesondere elektrohydraulischen und oder magnetischen, insbesondere elektromagnetischen, Zustandsvorrichtung erfolgen. Die Zustandsvorrichtung kann dem zumindest einen Stempel zugeordnet/zugewiesen sein. Die Zustandsvorrichtung kann Teil der Transporteinrichtung sein. Die Zustandsvorrichtung kann Teil der Aushärtestation sein.

Die Fördereinrichtung kann als Förderband/Transportband ausgebildet sein. Optional kann die Fördereinrichtung als Rollenförderer oder Rollenbahn, insbesondere als Allseiten-Rollenbahn, ausgebildet sein. Alternativ kann die Fördereinrichtung als Luftkissentisch und/oder Luftbahntisch ausgebildet sein.

In einer weiteren Variante ist der Stempel als Teil der Transporteinrichtung ausgebildet und die Vorrichtung umfasst weiter: eine erste Heizstation, die entlang der Fördereinrichtung angeordnet ist, und die dazu bestimmt und eingerichtet ist, die zumindest eine Transporteinrichtung oder den Stempel oder die Stempelwärmzone zu erwärmen, um beim Anpressen des Stempels an den Elektroden-Stapel die Wärmekontaktfläche zu erwärmen.

Optional beginnt der Aushärteprozess in der Vorrichtung mit dem Auflegen des Stempels auf den Elektroden-Stapel, wobei die Transporteinrichtung und/oder der Stempel und/oder die Stempelwärmzone in der ersten Heizstation erwärmt werden kann. Des Weiteren kann die erste Heizstation als Durchlauf-Heizstation oder Durchlauf-Ofen ausgebildet sein. Die Heizstation kann in Bezug zur Förderrichtung stromaufwärts der Aushärtestation, insbesondere vor dem Aushärtestations-Eingang, angeordnet sein.

Die erste Heizstation kann dazu eingerichtet sein, den Stempel die Stempelwärmzone induktiv oder elektrisch aufzuwärmen. Die Transporteinrichtung und/oder der Stempel und/oder die Stempelwärmzone kann in der ersten Heizstation im geöffneten oder geschlossenen Zustand; und/oder im Eingabe/Ausgabezustand erwärmt werden. Optional kann die erste Heizstation einen Heizstations-Eingang und einen Heizstations-Ausgang aufweisen. Durch den Heizstations-Eingang hindurch kann die zu erwärmende Transporteinrichtung, insbesondere entlang des Förderweges, der Heizstation zugeführt werden, und/oder die Transporteinrichtung, insbesondere erwärmte Transporteinrichtung, verlässt durch den Heizstations-Ausgang hindurch, insbesondere entlang des Förderweges, die erste Heizstation.

In einer weiteren Ausführungsform kann die Temperiereinheit zumindest teilweise als Kühleinheit ausgebildet und dazu eingerichtet sein, die Stempelkühlzone zu kühlen, wobei beim Anpressen des Stempels die Kühlkontaktfläche gekühlt wird.

Dies hat den Vorteil, dass nur die Elektroden-Stapel-Oberfläche erwärmt wird, die mit einem Klebstoff zwischen den Elektroden-Lagen eines Elektroden-Stapels korrespondiert. Die nicht mit einem Klebstoff zwischen den Elektroden-Lagen eines Elektroden-Stapels korrespondierende Elektroden-Stapel-Oberfläche kann dabei gekühlt werden. Eine umständliche Abschirmung der Elektroden-Stapel-Oberfläche, die nicht mit einem Klebstoff zwischen den Lagen eines Elektroden-Stapels korrespondiert entfällt. Des Weiteren wird durch die zonenweise Erwärmung und Kühlung des Elektroden-Stapel das Innere des Elektroden-Stapels nicht so stark belastet, womit die Klebeverbindung zwischen den Lagen des Elektroden-Stapels weniger/kaum belastet werden.

Als weitere Variante kann der Stempel Teil der Aushärtestation sein und/oder die Temperiereinrichtung kann teilweise als Heizeinheit ausgebildet sein, die dazu eingerichtet ist, den zumindest einen Stempel oder die Stempelwärmzone zu erwärmen.

In einer weiteren Variante kann die Aushärtestation des Weiteren umfassen, eine Umlaufeinheit, an der der Stempel angeordnet ist, und die dazu eingerichtet sein kann, während des Förderns der Transporteinrichtung den zumindest einen Stempel gegen den aufgenommenen Elektroden-Stapel zu pressen, um die Wärmekontaktflächen zu erwärmen und den Klebstoff des in der Transporteinrichtung aufgenommenen Elektroden-Stapels auszuhärten.

Dies hat den Vorteil, dass eine zeitlich kontinuierliche (während des Förderns durch die Aushärtestation) Erwärmung des Elektroden-Stapels durch die Stempelwärmzone erfolgt. Damit wird ein für den Elektroden-Stapel schonendes Aushärten realisiert, bei der die Klebeverbindungen aufgrund von reduzierter Erwärmungs-/Wärmedifferenz-Spannung weniger stark und/oder kaum beeinträchtigt werden. Des Weiteren kann durch die zeitlich kontinuierliche Förderung ein effizienter Förderprozess/Aushärteprozess sichergestellt werden, da die Transporteinrichtung mit dem aufgenommenen Elektroden-Stapel zur Erwärmung der Wärmekontaktstellen nicht in der Aushärtestation stoppen muss, sondern das Aushärten/Erwärmen, insbesondere des Elektroden-Stapels, während des Förderns stattfinden kann.

Optional kann die Temperiereinrichtung als Heiz- und Kühleinheit ausgebildet, und dazu eingerichtet sein, die Stempelwärmzone zu erwärmen und die Stempelkühlzone zu kühlen. Während des Anpressens des Stempels kann eine Wärmekontaktfläche und/oder Kühlkontaktfläche mit dem Elektroden-Stapel entstehen.

In einer weiteren Variante kann die Vorrichtung des Weiteren umfassen:
- eine Eingabeeinrichtung, die entlang des Fördereinrichtung angeordnet ist, und/oder
- eine Ausgabeeinrichtung, die entlang des Fördereinrichtung angeordnet ist, wobei die Eingabeeinrichtung dazu eingerichtet ist, den zumindest einen Elektroden-Stapel der Transporteinrichtung zuzuführen; und/oder die Ausgabeeinrichtung dazu eingerichtet ist, den zumindest einen Elektroden-Stapel von der Transporteinrichtung wegzuführen.

Dies hat den Vorteil, dass Eingabe und Ausgabe (Zufuhr und Abfuhr) des Elektroden-Stapels flexibler und schonender dem Aushärteprozess zugeführt oder entnommen werden können. Des Weiteren reduziert dies mechanische Spannungen während der Zufuhr des Elektroden-Stapels, da keine Notwendigkeit besteht, die Elektroden-Stapel als Rollenware zuzuführen. Des Weiteren werden die Eingabe und/oder Ausgabe der Elektroden-Stapel erleichtert.

Optional kann die Eingabeeinrichtung und/oder die Ausgabeeinrichtung als Vakuumband, insbesondere Überkopfvakuumband, ausgebildet sein. Daher kann mittels Eingabe- und Ausgabeeinrichtung die Elektroden-Stapel der Transporteinrichtung spannungsfrei/spannungsarm zugeführt und entnommen werden. In einer Variante ist keine Ausgabeeinrichtung entlang des Förderwegs angeordnet, sondern die Transporteinrichtung kann entlang des Förderwegs, zu weiteren Verarbeitungsstationen und/oder Bearbeitungsstationen gefördert werden.

Optional kann die Eingabeeinrichtung, zwischen der ersten Heizstation und der Aushärtestation, oder vor der Aushärtestation oder stromaufwärts der Aushärtestation, insbesondere vor dem Aushärtestations-Eingang, angeordnet sein. Des Weiteren kann die Ausgabestation, nach der Aushärtestation, insbesondere nach dem Aushärtestations-Ausgang, angeordnet sein. Optional kann die Eingabeeinrichtung entlang des Förderweges zwischen Heizstations-Ausgang und Aushärtestations-Eingang angeordnet sein. Optional kann die Ausgabestation zwischen Heizstations-Eingang und Aushärtestations-Ausgang angeordnet sein.

Des Weiteren kann die Eingabe- und/oder Ausgabeeinrichtung auf derselben Ebene wie die Fördereinrichtung angeordnet werden. Optional kann die Eingabe- und/oder Ausgabeeinrichtung auf einer höheren Ebene als die Fördereinrichtung angeordnet werden. Optional kann die Eingabe- und/oder Ausgabeeinrichtung auf einer niedrigeren Ebene als die Fördereinrichtung angeordnet werden.

In einer weiteren Variante kann die Eingabevorrichtung im Weiteren umfassen:
- einen Zufuhrförderweg, der den zumindest einen Elektroden-Stapel entlang einer Zufuhrförderrichtung zu einer Eingabestation fördert; und/oder die Ausgabeeinrichtung, die im Weiteren umfasst:
- einen Entnahmeförderweg, der den zumindest einen Elektroden-Stapel entlang einer Entnahmefördereinrichtung von einer Ausgabestation weg fördert.

Optional kann die Eingabestation, die zwischen der ersten Heizstation und der Aushärtestation, oder vor der Aushärtestation oder stromaufwärts der Aushärtestation, insbesondere vor dem Aushärtestations-Eingang, angeordnet und dazu eingerichtet sein, der Transporteinrichtung den Elektroden-Stapel zuzuführen. Des Weiteren kann die Ausgabestation, die nach der Aushärtestation, insbesondere nach dem Aushärtestations-Ausgang, angeordnet und dazu eingerichtet sein, der Transporteinrichtung den Elektroden-Stapel zu entnehmen. Optional kann die Eingabestation entlang des Förderweges zwischen Heizstations-Ausgang und Aushärtestations-Eingang angeordnet sein. Optional kann die Ausgabestation zwischen Heizstations-Eingang und Aushärtestations-Ausgang angeordnet sein.

Des Weiteren kann die Eingabe- und/oder Ausgabestation als Bestückungsautomat oder "Pick-and-place Roboter" ausgebildet sein. Der Bestückungsautomat oder "Pick-and-place Roboter" kann einen Elektroden-Stapel dem Zufuhrförderweg und/oder der Transporteinrichtung entnehmen; und/oder der Transporteinrichtung und/oder dem Entnahmeförderweg einen Elektroden-Stapel zuführen. Der Bestückungsautomat oder "Pick-and-place Roboter" kann dazu eingerichtet sein die Transporteinrichtung in einen Eingabe- und/oder Ausgabezustand, und/oder in einen geschlossenen und/oder geöffneten Zustand zu versetzen. Die Aufgaben der Eingabe und Ausgabestation können von demselben Bestückungsautomaten oder "Pick-and-place Roboter" durchgeführt werden. Dazu findet die Zufuhr der Transporteinrichtung mit dem Elektroden-Stapel und die Entnahme desselbigen von der Transporteinrichtung in der Eingabe- und/oder Ausgabestation statt. Die Eingabe- und Ausgabestation kann als ein Bestückungsautomat oder "Pick-and-place Roboter" ausgebildet sein. Der Bestückungsautomat kann in diesem Fall entlang der Fördereinrichtung angeordnet sein, insbesondere auf Höhe und/oder Nähe der Aushärtestation und/oder auf der Aushärtestation, um in der Eingabe- und Ausgabestation die Zufuhr der Transporteinrichtung und Entnahme des Elektroden-Stapels durchzuführen. Die Zustandsvorrichtung kann Teil des Bestückungsautomaten oder des "Pick-and-place Roboters" sein.

Des Weiteren kann der Zufuhr- und/oder Entnahmeförderweg auf derselben Ebene wie die Fördereinrichtung angeordnet werden. Optional kann der Zufuhr- und/oder Entnahmeförderweg auf einer höheren Ebene als die Fördereinrichtung angeordnet werden. Optional kann der Zufuhr- und/oder Entnahmeförderweg auf einer niedrigeren Ebene als die Fördereinrichtung angeordnet werden.

In einer weiteren Variante kann die Transporteinrichtung über den Förderweg der Aufnahmestation oder stromaufwärts der Aufnahmestation, insbesondere dem Aushärtestations-Eingang oder der ersten Heizstation; oder stromaufwärts der ersten Heizstation, insbesondere dem Heizstations-Eingang, erneut zugeführt werden.

Dies hat den Vorteil, dass die für den Aushärteprozess notwendigen Transportkomponenten reduziert werden. Zeitgleich kann über Anzahl der Transporteinrichtungen und zu definierender Fördergeschwindigkeit der Fördereinrichtung der Durchsatz an auszuhärtenden und gehärteten Elektroden-Stapeln flexibel angepasst werden.

Eine Elektroden-Stapel-Transportvorrichtung kann zumindest umfassen:
- eine Palette, die dazu eingerichtet ist, zumindest einen Elektroden-Stapel aufzunehmen und/oder freizugeben,
- zumindest einen Stempel, wobei eine Stempelfläche des Stempels zumindest eine Stempelwärmzone und/oder zumindest eine Stempelkühlzone aufweist, wobei der Stempel dazu eingerichtet ist, den Elektroden-Stapel an die Palette anzupressen und beim Anpressen eine Wärmekontaktfläche und/oder eine Kühlkontaktfläche bildet.

Ein Teil eines Stempelkörpers, der mit der Stempelwärmzone oder der Stempelkühlzone übereinstimmt/korrespondiert kann aus unterschiedlichen Materialien und/oder Materialstärken bestehen. Der Teil des Stempelkörpers, der mit einer Stempelkühlzone übereinstimmt, kann aus Nichtleiter-Materialien, insbesondere Kunststoff, insbesondere Wärme-resistenten Kunststoffen bestehen. Der Teil des Stempelkörpers der mit der Stempelwärmzone übereinstimmt, kann aus Leiter-Material bestehen.

Der Teil des Stempelkörpers, der mit einer Stempelkühlzone übereinstimmt, kann gegenüber dem Teil des Stempelkörpers, der mit einer Stempelwärmzone übereinstimmt, aus einer geringeren Materialstärke bestehen.

In einer weiteren Ausführungsform kann der Stempel als Niederhaltestempel und/oder Heizstempel ausgestaltet ist; und/oder der Stempel oder die Stempelwärmzonen mit elektrischem Strom oder induktiv oder über eine Heizstation erwärmt werden.

Elektroden-Stapel-Herstellungsvorrichtung aufweisend die Vorrichtung zum Aushärten des Elektroden-Stapels und/oder einer Transporteinrichtung.

### Kurzbeschreibung der Figuren

Weitere Merkmale, Eigenschaften, Vorteile und mögliche Abwandlungen werden für einen Fachmann anhand der nachstehenden Beschreibungen deutlich, in der auf die beigefügten Zeichnungen Bezug genommen ist.
- Fig.1: zeigt das Verfahren zum Aushärten eines Klebstoffs zwischen den Elektroden-Lagen eines Elektroden-Stapels
- Fig.2: zeigt ein Beispiel für eine Vorrichtung zum Aushärten eines Klebstoffs zwischen den Elektroden-Lagen eines Elektroden-Stapels.
- Fig.3: zeigt ein Beispiel für eine Vorrichtung zum Aushärten eines Klebstoffs zwischen den Elektroden-Lagen eines Elektroden-Stapels ersten Heizstation und einer Aushärtestation.
- Fig.4: zeigt ein Beispiel für eine Vorrichtung zum Aushärten eines Klebstoffs zwischen den Elektroden-Lagen eines Elektroden-Stapels mit Aushärtestation und einer Umlaufeinheit.
- Fig.5: zeigt ein Beispiel für eine Vorrichtung zeigt ein Beispiel für eine Vorrichtung zum Aushärten eines Klebstoffs zwischen den Elektroden-Lagen eines Elektroden-Stapels mit einer Eingabe- und einer Ausgabevorrichtung sowie einer ersten Heizstation und einer Aushärtestation.
- Fig. 6: zeigt ein Beispiel eines Stempels mit vertiefte Stempelkühlzonen und hervorgehobenen Stempelwärmzonen.
- Fig. 7: zeigt ein Beispiel eines Stempels mit einer ebenen Stempelfläche die Stempelwärmzonen und Stempelkühlzonen aufweist.
- Fig. 8: zeigt ein Beispiel eines Stempels, bei dem der Stempelrand der Stempelfläche den Elektroden-Stapel umfasst.

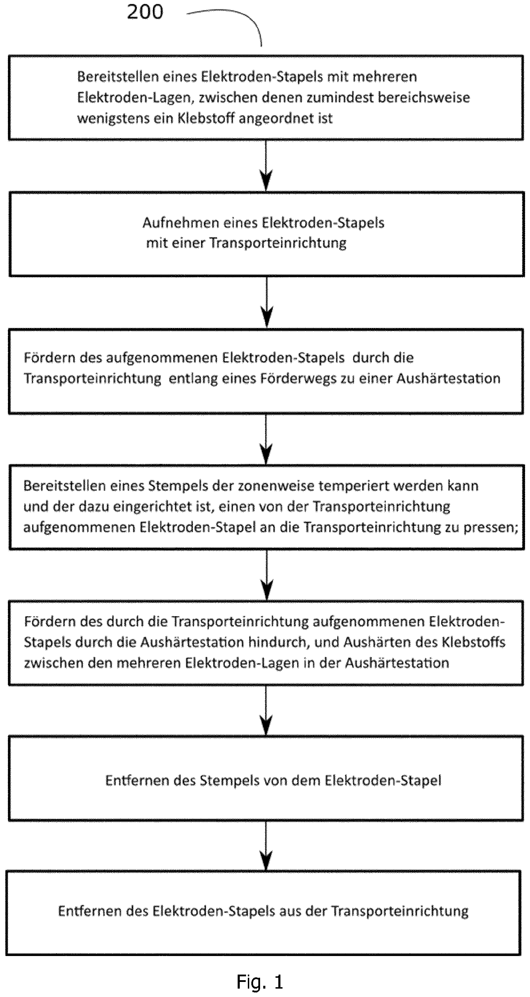

Fig. 1 zeigt ein Ablaufdiagramm für das Verfahren 200 zum Aushärten eines Klebstoffs zwischen Elektroden-Lagen eines Elektroden-Stapels. Hier wird in einem ersten Schritt ein Elektroden-Stapel mit mehreren Elektroden-Lagen bereitgestellt. Zwischen den Elektroden-Lagen ist wenigstens ein Klebstoff angeordnet. In einem weiteren Schritt wird dieser Elektroden-Stapel mit einer Transporteinrichtung aufgenommen. In einem darauffolgenden Schritt wird die Transporteinrichtung, die den Elektroden-Stapel aufgenommen hat, entlang eines Förderwegs zu einer Aushärtestation transportiert. In einem weiteren Schritt presst ein Stempel den Elektroden-Stapel gegen die Palette. Der Stempel wird zonenweise temperiert. Im darauf folgenden Schritt wird die Transporteinrichtung, die den Elektroden-Stapel aufgenommen hat und gegen den Stempel presst, durch die Aushärtestation gefördert und härtet den Klebstoff zwischen den Elektroden-Lagen des Elektroden-Stempels aus. In einem weiteren Schritt wird der Stempel von dem Elektroden-Stapel entfernt. Daraufhin wird der Elektroden-Stapel von der Transporteinrichtung entfernt.

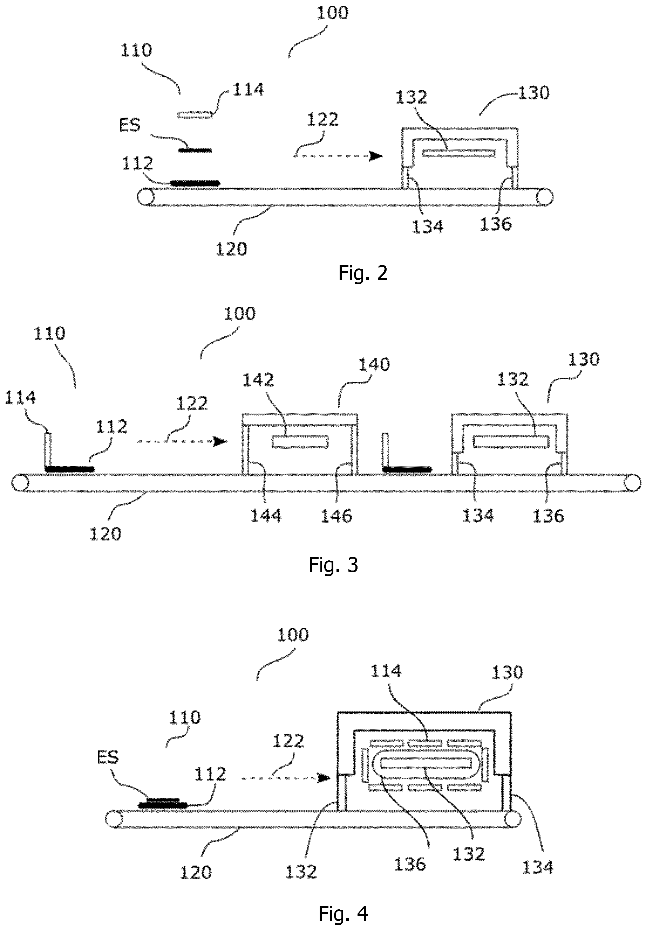

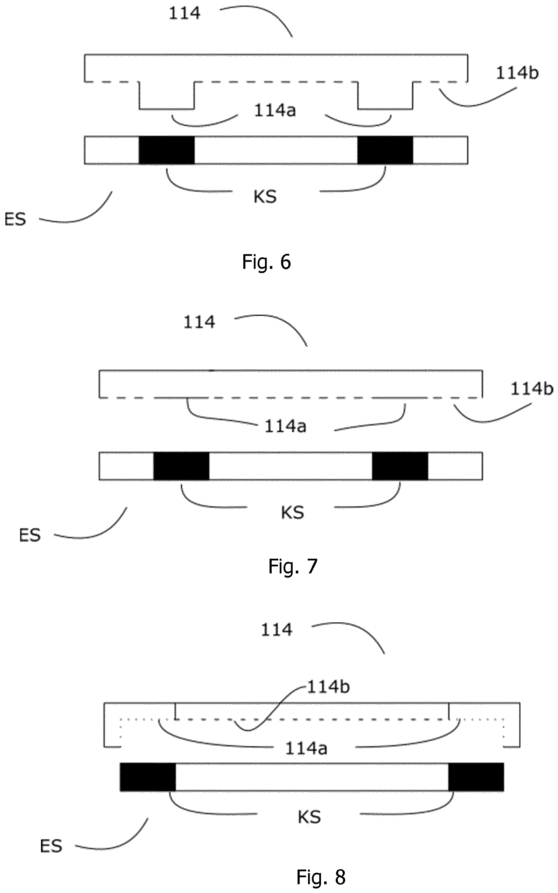

Fig. 2 zeigt eine Vorrichtung 100 die einen Klebstoff zwischen Elektroden-lagen eines Elektroden-Stapels aushärtet. Die Vorrichtung umfasst eine Transporteinrichtung 110, eine Fördereinrichtung 120 und eine Aushärtestation 130. Die Transporteinrichtung 110, die in der Fig. 2 als Explosionszeichnung dargestellt ist, weist auf: eine Palette 112 und einen Stempel 114, zwischen denen ein aufgenommener Elektroden-Stapel ES angeordnet ist. In dieser Variante ist der Stempel Teil der Transporteinrichtung und ist an der Palette drehbar/schwenkbar montiert. Die Stempelfläche des Stempels ist eben und der Stempel weist zumindest eine Stempelkühlzone 114b (siehe Fig. 7) und zumindest eine Stempelwärmzone 114a (siehe Fig. 7) auf. Die Fördereinrichtung ist als Transportband ausgebildet und fördert die Transporteinrichtung mit aufgenommenen Elektroden-Stapel ES entlang der Förderrichtung 122. Die Aushärtestation 130 ist entlang der Fördereinrichtung 120 angeordnet und dazu eingerichtet die Stempelwärmzonen induktiv zu erwärmen. Die Aushärtestation weist einen Aushärtestations-Eingang 134 und einen Aushärtestations-Ausgang 136 auf. Die Transporteinrichtung 110 wird zum Aushärtestations-Eingang 134 gefördert. Die Transporteinrichtung 110 befindet sich in Relation zur Förderrichtung 122 stromaufwärts der Aushärtestation 130. Vor der Aushärtestation 130, insbesondere stromaufwärts der Aushärtestation, wird die Transporteinrichtung 110 geschlossen, womit die Transporteinrichtung in einen geschlossenen Zustand übergeht. Im geschlossenen Zustand bildet der aufgenommene Elektroden-Stapel ES mit dem vollflächig aufliegenden Stempel 114 eine Wärmekontaktfläche und eine Kühlkontaktfläche.

Die Transporteinrichtung 110 wird im geschlossenen Zustand in die Aushärtestation 130 gefördert. Während des Förderns wird die Stempelwärmzone durch die Temperiereinheit 132 induktiv erwärmt und gibt seine gewonnene Wärme mehrheitlich über die Wärmekontaktfläche an die Elektroden-Stapel-Oberfläche ab, die mit einem Klebstoff zwischen den Elektroden-Lagen des Elektroden-Stapels ES korrespondiert. Die Stempelkühlzone wird in diesem Beispiel nicht gekühlt, womit die Kühlkontaktfläche keine aktive Kühlung erfahren. Die Stempelwärmzone wird auf eine Temperatur von etwa 100°C erhitzt. Unter Umständen erfahren Anteile der Kühlkontaktflächen die an den Wärmekontaktflächen angrenzen, eine marginale Erwärmung. Mehrheitlich wird aber nur die Stempelwärmzone erwärmt die mit einem Klebstoff zwischen den Elektroden-Lagen des Elektroden-Stapels übereinstimmt. Mit Erwärmung der Stempelwärmzone beginnt das Aushärten in der Aushärtestation 130. Im Moment der Förderung aus dem Aushärtestations-Ausgang 136 hinaus, wird die Stempelwärmzone nicht weiter induktiv erwärmt. Die Transporteinrichtung wird entlang des Förderweges zu weiteren (nicht illustriert) Verarbeitungs- oder Bearbeitungsstationen gefördert. Zum Beispiel kann die Transporteinrichtung zu einer Entnahmestation gefördert werden.

Die Fig. 3 skizziert ein Beispiel einer Vorrichtung 100 zum Aushärten eines Klebstoffs zwischen den Elektroden-Lagen eines Elektroden-Stapels mit einer ersten Heizstation 140 und einer Aushärtestation 130. Die Transporteinrichtung weist eine Palette auf, an der der Stempel schwenkbar/drehbar montiert ist. Die Transporteinrichtung 110 ist in einem Eingabezustand und/oder geöffneten Zustand illustriert. Die im Eingabezustand und/oder geöffneten Zustand befindliche Transporteinrichtung 110 wird entlang der Förderrichtung 122 zu der ersten Heizstation 140 gefördert. Die Heizstation 140 ist im illustrierten Beispiel als Durchlauf-Ofen ausgebildet und dazu eingerichtet während des Förderns der Transporteinrichtung durch die Heizstation die Stempelwärmzone zu erwärmen. Die Heizstation weist einen Heizstations-Eingang 144 und einen Heizstations-Ausgang 146 auf. Im illustrierten Beispiel wird die Transporteinrichtung 110 im Eingabezustand in die Heizstation 140 durch den Heizstations-Eingang 144 gefördert. Die Transporteinrichtung 110 verlässt im Eingabezustand die erste Heizstation 140 durch den Heizstations-Ausgang 146. Die Transporteinrichtung 110 befindet sich nun stromabwärts des Heizstations-Ausgangs 146 und stromaufwärts des Aushärtestations-Eingangs 134 und ist immer noch im Eingabezustand. An dieser Position entlang der Fördereinrichtung 120 wird der Transporteinrichtung 110, insbesondere der Palette 112, ein auszuhärtender Elektroden-Stapel zugeführt (nicht dargestellt). Daraufhin wird die Transporteinrichtung 110 geschlossen, indem der Stempel 114 auf dem Elektroden-Stapel (nicht illustriert) vollflächig auffliegt und diesen gegen die Palette presst. Da die Stempelwärmzone im Durchlauf-Ofen 140 erwärmt wurde und nun auf dem Elektroden-Stapel ES aufliegt, erwärmt sich die Wärmekontaktfläche. Die Transporteinrichtung 110 wird auf der Fördereinrichtung 120 entlang der Förderrichtung 122 zur Aushärtestation 130 gefördert, wobei die Transporteinrichtung durch den Aushärtestations-Eingang 134 der Aushärtestation zugeführt wird. Die Temperiereinheit 132 ist in dieser Variante teilweise als Kühleinheit ausgebildet und dazu eingerichtet die Stempelkühlzone zu kühlen. Die Transporteinrichtung 110 wird durch den Aushärtestations-Ausgang 136 aus der Aushärtestation 130 gefördert. Hier kann die Transporteinrichtung einen Entnahmezustand einnehmen (nicht illustriert), um den Elektroden-Stapel ES zu entfernen, oder die Transporteinrichtung wird entlang der Förderrichtung 122 zu weiteren Verarbeitungs- und/oder Bearbeitungsstationen gefördert (nicht illustriert).

Die Fig. 4 zeigt ein Beispiel einer Vorrichtung 100 zum Aushärten eines Klebstoffs zwischen den Elektroden-Lagen eines Elektroden-Stapels mit Aushärtestation und einer Umlaufeinheit 136 an der eine Vielzahl von Stempeln 114 angeordnet sind. Die Temperiereinheit 132 ist dazu eingerichtet, die Stempelwärmzonen zu erwärmen, während die Umlaufeinheit 136 die Stempel in der Aushärtestation 130 zirkuliert. Der Transporteinrichtung 110 wird ein Elektroden-Stapel ES zugeführt und die Transporteinrichtung wird entlang der Förderrichtung 122 auf der Fördereinrichtung 120 zur Aushärtestation 130 gefördert. Die Transporteinrichtung 110 wird durch den Aushärtestations-Eingang 132 in die Aushärtestation geführt. Die Umlaufeinheit 136 zirkuliert die angeordneten Stempel 114 in einer Umlaufgeschwindigkeit, die der Fördergeschwindigkeit der Fördereinrichtung 120 entspricht. Während der Zufuhr der Transporteinrichtung 110 in die Aushärtestation 130 zirkulieren die Stempel 114 derart, dass während der Förderung einer der Stempel auf eine Transporteinrichtung oder auf einen Elektroden-Stapel presst. Da die Umlaufgeschwindigkeit der Umlaufeinheit 132 die gleiche Geschwindigkeit wie die Fördergeschwindigkeit der Fördereinrichtung 120 aufweist (Relativgeschwindigkeit = 0), verbleibt während der Förderung der Transporteinrichtung 110 durch die Aushärtestation 130 der Stempel auf dem Elektroden-Stapel ES. Damit wird die Wärmekontaktfläche erwärmt und ein Klebstoff zwischen den Elektroden-Lagen des Elektroden-Stapels ES härtet aus. Die Transporteinrichtung 110 wird durch den Aushärtestations-Ausgang 134 hindurch aus der Aushärtestation gefördert. Während die Transporteinrichtung 110 zum Aushärtestations-Ausgang 134 gefördert wird, löst/trennt sich der Stempel 114 vom Elektrode-Stapel ES und wird weiter durch die Umlaufeinheit 136 in der Aushärtestation 130 zirkuliert. Transporteinrichtung und Stempel werden in der Aushärtestation zusammengeführt und/ oder getrennt.

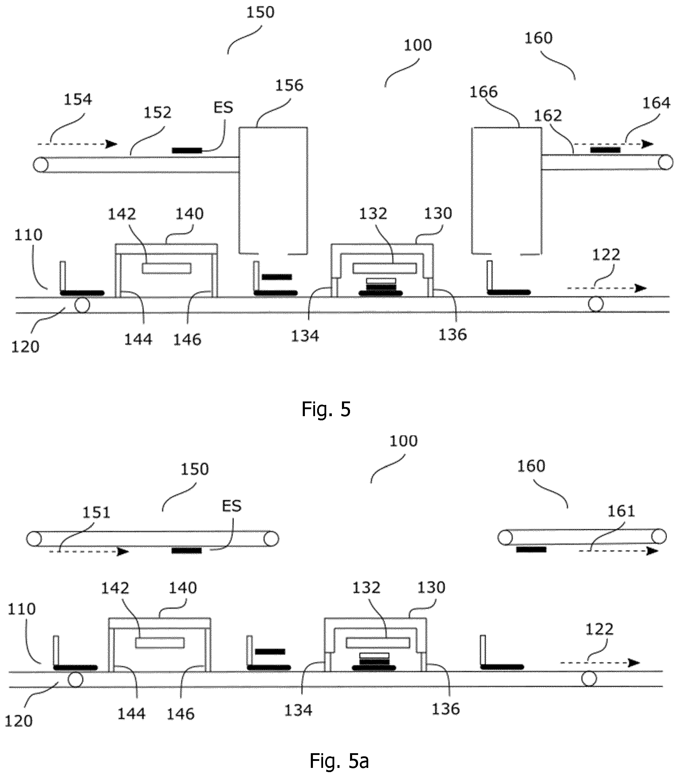

Die Fig. 5 zeigt ein Beispiel einer Vorrichtung 100 zum Aushärten eines Klebstoffs zwischen den Elektroden-Lagen eines Elektroden-Stapels mit Aushärtestation 130 die im Weiteren umfasst, eine Eingabeeinrichtung 150 und eine Ausgabeeinrichtung 160. Beide sind entlang des Förderweges 120 angeordnet und sind entweder dazu eingerichtet, der Transporteinrichtung 110 einen Elektroden-Stapel ES zuzuführen oder der Transporteinrichtung einen Elektroden-Stapel zu entnehmen. Im gezeigten Beispiel wird eine Transporteinrichtung im Eingabe-/Ausgabezustand, insbesondere die Stempelwärmfläche, in einer ersten Heizstation 140 erwärmt. Die Heizstation ist als Durchlauf-Ofen ausgebildet und erwärmt die Stempelwärmfläche induktiv. Die Transporteinrichtung wird aus dem Durchlauf-Ofen gefördert und befindet sich zwischen dem Heizstations-Ausgang 146 und dem Aushärtestations-Eingang 132.

Der Transporteinrichtung wird über die Eingabeeinrichtung der Elektroden-Stapel ES mit einem auszuhärtenden Klebstoff zugeführt. Insbesondere wird der Elektroden-Stapel ES über einen Zufuhrförderweg 152 entlang einer Zufuhrförderrichtung 154 und über eine Eingabestation 156 der geöffneten Transporteinrichtung 110 zugeführt. Die Transporteinrichtung 110 geht daraufhin in den geschlossenen Zustand. Da die Stempelwärmzone erwärmt wurde, erwärmt sich mit Auflegen des Stempels auf den Elektroden-Stapel die Wärmekontaktfläche. Die Transporteinrichtung 110 wird auf der Fördereinrichtung 120 entlang der Förderrichtung 122 zur Aushärtestation 130 gefördert, wobei die Transporteinrichtung durch den Aushärtestations-Eingang 134 der Aushärtestation 130 zugeführt wird. Die Temperiereinheit 132 ist in dieser Variante als Kühleinheit ausgebildet und dazu eingerichtet die Stempelkühlfläche zu kühlen. Somit findet eine Erwärmung der Wärmekontaktflächen durch die zuvor erwärmte Stempelwärmzone statt; und eine Kühlung der Kühlkontaktflächen durch die Aushärtestation 130, wobei die Wärmekontaktfläche mit einem Klebstoff zwischen den Elektroden-Lagen des Elektroden-Stapels ES korrespondiert.

Die Transporteinrichtung 110 wird durch den Aushärtestations-Ausgang 136 aus der Aushärtestation 130 gefördert. Hier nimmt die Transporteinrichtung 110 den Ausgabezustand ein. Die Ausgabeeinrichtung 160, insbesondere die Ausgabestation 166, entnimmt der Transporteinrichtung den Elektroden-Stapel und fördert diesen auf einem Entnahmeförderweg 162 entlang einer Entnahmeförderrichtung 164. Der Elektroden-Stapel ES ist von der Transporteinrichtung 110 getrennt. Im gezeigten Beispiel wird die Transporteinrichtung entlang der Förderrichtung 121 stromaufwärts der Heizstation 140 erneut zugeführt. Der vorher beschriebene Ablauf der Fig. 5 wird wiederholt.

Die Fig. 5a zeigt eine Vorrichtung in abgewandelter Form zu Fig. 5. In dieser Variante ist die Eingabeeinrichtung 150 und die Ausgabeeinrichtung 160 als Überkopfvakuumband ausgebildet. Die Eingabeeinrichtung fördert entlang einer Eingaberichtung 151 den Elektroden-Stapel und führt diesen der Transporteinrichtung 110 zu. Die Ausgabeeinrichtung entnimmt den ausgehärteten Elektroden-Stapel und fördert diesen entlang einer Ausgaberichtung. In der Darstellung sind die Eingabe- und Ausgabeeinrichtung aus Illustrationsgründen mit einem großen Abstand von der Fördereinrichtung und der Transporteinrichtung skizziert. In einer technischen Umsetzung würden beide Vakuumbänder derart in Nähe der Fördereinrichtung montiert werden, sodass die Vakuumbänder den Elektroden-Stapel schadlos (für Elektroden-Stapel und Transporteinrichtung) der Transporteinrichtung zuführen und entnehmen/ansaugen können.

Die Fig. 6 zeigt ein Beispiel eines Stempels 114 mit vertiefte Stempelkühlzone und hervorgehobener Stempelwärmzone. Der Stempel 114 weist eine Stempelkühlzone 114b und eine Stempelwärmzone 114a auf. Die Stempelkühlzone 114b ist durch die gestrichelte Linie dargestellt, die einen Teil der Stempelfläche einnimmt. Die Stempelwärmzone 114a ist durch die durchgezogene Linie des hervorgehobenen anderen Teils der Stempelfläche dargestellt (Flanken der Stempelwärmzone ausgenommen). Die Stempelwärmzone korrespondiert mit einem Klebstoff KS zwischen den Elektroden-Lagen eines Elektroden-Stapels ES. Die Stempelwärmzone kann induktiv oder elektrisch erwärmt werden. Die Stempelkühlzone kann hingegen aktiv gekühlt werden. Der Stempel 114 liegt, wenn er den Elektroden-Stapel gegen die Palette (nicht dargestellt) presst, vollflächig auf dem Elektroden-Stapel auf. In einer anderen Variante kann nur die Stempelwärmzone auf dem Elektroden-Stapel aufliegen und die resultierende Wärmekontaktfläche erwärmen. Die Stempelkühlzone kühlt, wenn vorgesehen, den Raum zwischen Stempelkühlzone und Elektroden-Stapel und damit kontaktlos die Kühlkontaktfläche.

Die Fig. 7 zeigt ein Beispiel eines Stempels 114 indem die Stempelfläche eben/plan ist. Die Stempelfläche weist eine Stempelwärmzone 114a und eine Stempelkühlzone 114b auf. Die Stempelwärmzone 114a korrespondiert mit dem Klebstoff KS zwischen den Elektroden-Lagen eines Elektroden-Stapels.

Die Fig. 8 zeigt ein Beispiel eines Stempels, indem die Dimension/Ausdehnung des Stempels 114 größer ist als die Dimension/Ausdehnung des Elektroden-Stapels ES. In Fig. 8 ist die Stempelkühlzone 114b als gestrichelte Linie und die Stempelwärmzone 114a als gepunktete Linie dargestellt. Der Stempel, insbesondere die Stempelwärmzone umfasst den Elektroden-Stapel, womit Seitenflächen des Elektroden-Stapels erwärmt werden.

Die vorstehend beschriebenen Varianten der Vorrichtung, deren Aufbau- und Betriebsaspekte, sowie die Varianten der Verfahrensweise dienen lediglich dem besseren Verständnis der Struktur, der Funktionsweise und der Eigenschaften; sie schränken die Offenbarung nicht etwa auf die Ausführungsbeispiele ein. Die Fig. sind teilweise schematisch. Dabei sind wesentliche Eigenschaften und Effekte zum Teil deutlich vergrößert dargestellt, um die Funktionen, Wirkprinzipien, technischen Ausgestaltungen und Merkmale zu verdeutlichen. Dabei kann jede Funktionsweise, jedes Prinzip, jede technische Ausgestaltung und jedes Merkmal, welches/welche in den Fig. oder im Text offenbart ist/sind, mit allen Ansprüchen, jedem Merkmal im Text und in den anderen Fig., anderen Funktionsweisen, Prinzipien, technischen Ausgestaltungen und Merkmalen, die in dieser Offenbarung enthalten sind oder sich daraus ergeben, frei und beliebig kombiniert werden, so dass alle denkbaren Kombinationen der beschriebenen Vorgehensweise zuzuordnen sind. Dabei sind auch Kombinationen zwischen allen einzelnen Ausführungen im Text, das heißt in jedem Abschnitt der Beschreibung, in den Ansprüchen und auch Kombinationen zwischen verschiedenen Varianten im Text, in den Ansprüchen und in den Fig. umfasst. Auch die Ansprüche limitieren nicht die Offenbarung und damit die Kombinationsmöglichkeiten aller aufgezeigten Merkmale untereinander. Alle offenbarten Merkmale sind explizit auch einzeln und in Kombination mit allen anderen Merkmalen hier offenbart.

## Patentansprüche

1. Ein Verfahren (200) zum Aushärten eines Klebstoffs zwischen Elektroden-Lagen eines Elektroden-Stapels umfasst die Schritte:
- Bereitstellen eines Elektroden-Stapels (ES) mit mehreren Elektroden-Lagen, zwischen denen zumindest bereichsweise wenigstens ein Klebstoff (KS) angeordnet ist;
- Aufnehmen des Elektroden-Stapels (ES) mit einer Transporteinrichtung (110);
- Fördern des aufgenommenen Elektroden-Stapels (ES) durch die Transporteinrichtung (110) entlang eines Förderwegs (120) zu einer Aushärtestation (130);
- Bereitstellen eines zonenweise temperierbaren Stempels (114) und der dazu eingerichtet ist, einen von der Transporteinrichtung (110) aufgenommenen Elektroden-Stapel (ES) an die Transporteinrichtung (110) zu pressen;
- Fördern des durch die Transporteinrichtung (110) aufgenommenen Elektroden-Stapels (ES) durch die Aushärtestation (130) hindurch, und Aushärten des Klebstoffs zwischen den mehreren Elektroden-Lagen in der Aushärtestation (130);
- Entfernen des Stempels (114) von dem Elektroden-Stapel (ES);
- Entfernen des Elektroden-Stapels (ES) aus der Transporteinrichtung (110).

2. Eine Vorrichtung (100) zum Aushärten eines Klebstoffs zwischen Elektroden-Lagen eines Elektroden-Stapels umfasst:
- zumindest eine Transporteinrichtung (110) mit einer Palette (112), die dazu eingerichtet ist, einen Elektroden-Stapel (ES) aufzunehmen und zu entfernen;
- zumindest einen Stempel (114), der dazu bestimmt und eingerichtet ist, den durch die Transporteinrichtung (110) aufgenommenen Elektroden-Stapel (ES) an die Palette (112) anzupressen;
- eine Fördereinrichtung (120), die dazu bestimmt und eingerichtet ist, die zumindest eine Transporteinrichtung (110) aufzunehmen und entlang einer Förderrichtung (122) zu fördern;
- eine Aushärtestation (130), die eine Temperiereinheit (132) umfasst, wobei die Aushärtestation (130) entlang der Fördereinrichtung (120) angeordnet ist, und die dazu bestimmt und eingerichtet ist, einen Klebstoff auszuhärten;
wobei eine Stempelfläche des Stempels (114) zumindest eine Stempelkühlzone
und/oder zumindest eine Stempelwärmzone aufweist, und wobei beim Anpressen des Stempels (114) eine Wärmekontaktfläche und/oder Kühlkontaktfläche mit dem Elektroden-Stapel (ES) entsteht.

3. Die Vorrichtung nach Anspruch 2, wobei der Stempel (114) als Teil der Transporteinrichtung (110) ausgebildet ist und die Vorrichtung (100) weiter umfasst:
- eine erste Heizstation (140), die entlang der Fördereinrichtung (120) angeordnet ist, und die dazu bestimmt und eingerichtet ist, die zumindest eine Transporteinrichtung (110) oder den Stempel (114) oder die Stempelwärmzone zu erwärmen, wobei beim Anpressen des Stempels (114) die Wärmekontaktfläche erwärmt wird.

4. Die Vorrichtung nach Anspruch 3, wobei die Temperiereinheit (132) zumindest teilweise als Kühleinheit ausgebildet und dazu eingerichtet ist, die Stempelkühlzone zu kühlen, wobei beim Anpressen des Stempels (114) die Kühlkontaktfläche gekühlt wird.

5. Die Vorrichtung nach Anspruch 2, wobei der Stempel (114) als Teil der Aushärtestation (130) ausgebildet ist, und/oder die Temperiereinheit (132) zumindest teilweise als Heizeinheit ausgebildet und dazu eingerichtet ist, die Stempelwärmzone zu erwärmen.

6. Die Vorrichtung nach Anspruch 5, wobei die Aushärtestation (130) weiter umfasst: eine Umlaufeinheit (136) an der der Stempel (114) angeordnet ist, die dazu eingerichtet ist, während des Förderns der Transporteinrichtung (110) den zumindest einen Stempel (114) gegen den aufgenommenen Elektroden-Stapel (ES) zu pressen, um die Wärmekontaktfläche zu erwärmen und den Klebstoff des in der Transporteinrichtung (110) aufgenommenen Elektroden-Stapels (ES) auszuhärten.

7. Die Vorrichtung nach einem der Ansprüche 2 bis 6 weiter umfassend:
- eine Eingabeeinrichtung (150), die entlang der Fördereinrichtung (120) angeordnet ist; und/oder
- eine Ausgabeeinrichtung (160), die entlang der Fördereinrichtung (120) angeordnet ist;
wobei die Eingabeeinrichtung (150) dazu eingerichtet ist, den zumindest einen Elektroden-Stapel (ES) der Transporteinrichtung (110) zuzuführen; und/oder die Ausgabeeinrichtung (160) dazu eingerichtet ist, den zumindest einen Elektroden-Stapel (ES) von der Transporteinrichtung (110) wegzuführen.

8. Die Vorrichtung nach Anspruch 7, wobei die Eingabeeinrichtung (150) und/oder die Ausgabeeinrichtung (160) als ein Vakuumband, insbesondere als ein Überkopfvakuumband, ausgebildet sind/ist.

9. Die Vorrichtung nach Anspruch 7,
wobei die Eingabeeinrichtung (150) im Weiteren umfasst:
- einen Zufuhrförderweg (152), der den zumindest einen Elektroden-Stapel (ES) entlang einer Zufuhrförderrichtung (154) zu einer Eingabestation (156) fördert;
und/oder die Ausgabeeinrichtung (160), die im Weiteren umfasst:
- einen Entnahmeförderweg (162), der den zumindest einen Elektroden-Stapel entlang einer Entnahmeförderrichtung (164) von einer Ausgabestation (166) weg fördert.

10. Die Vorrichtung nach Anspruch 9, wobei
- die Eingabestation (156), die stromabwärts der ersten Heizstation (140) und stromaufwärts der Aushärtestation (130), oder stromaufwärts der Aushärtestation (130) angeordnet ist, dazu eingerichtet ist, der Transporteinrichtung (110) den Elektroden-Stapel (ES) zuzuführen;
und/oder
- die Ausgabestation (166), die stromabwärts der Aushärtestation (130) angeordnet ist, dazu eingerichtet ist, der Transporteinrichtung (110) den Elektrodenstapel (ES) zu entnehmen.

11. Die Vorrichtung nach Anspruch 10, wobei die Transporteinrichtung (110) dazu eingerichtet ist, über die Fördereinrichtung (120) stromaufwärts der Aufnahmestation (156) oder stromaufwärts der ersten Heizstation (140) erneut zugeführt zu werden.

12. Eine Elektroden-Stapel-Herstellungsvorrichtung aufweisend:
die Vorrichtung zum Aushärten des Elektroden-Stapels nach Anspruch 2.

## Claims

1. A method (200) for curing an adhesive between electrode layers of an electrode stack comprises the steps of:
- Providing an electrode stack (ES) with several electrode layers, between which at least one adhesive (KS) is arranged at least in certain areas;
- Picking up the electrode stack (ES) with a transport device (110);
- Conveying of the picked-up electrode stack (ES) by the transport device (110) along a conveying path (120) to a curing station (130);
- Providing a ram (114) which can be tempered in zones and which is set up to press an electrode stack (ES) picked up by the transport device (110) against the transport device (110);
- Conveying the stack of electrodes (ES) picked up by the transport device (110) through the curing station (130), and curing the adhesive between the multiple electrode layers in the curing station (130);
- Removing the ram (114) from the electrode stack (ES);
- Removing the electrode stack (ES) from the transport device (110).

2. A device (100) for curing an adhesive between electrode layers of an electrode stack comprises:
- at least one transport device (110) with a pallet (112) which is set up to receive and remove a stack of electrodes (ES);
- at least one ram (114) which is intended and set up to press the stack of electrodes (ES) picked up by the transport device (110) against the pallet (112);
- a conveying device (120), which is intended and set up to receive the at least one transport device (110) and to convey it along a conveying direction (122);
- a curing station (130) comprising a temperature control unit (132), wherein the curing station (130) is arranged along the conveying device (120) and is intended and arranged to cure an adhesive;
wherein a stamp surface of the ram (114) has at least one stamp cooling zone
and/or at least one stamp heating zone, and wherein a heat contact surface and/or cooling contact surface is formed with the electrode stack (ES) when the ram (114) is pressed on.

3. The device according to claim 2, wherein the ram (114) is formed as part of the transport device (110) and further comprises the device (100):
- a first heating station (140), which is arranged along the conveying device (120) and which is intended and set up to heat the at least one transport device (110) or the ram (114) or the punch heating zone, the heat contact surface being heated when the ram (114) is pressed on.

4. The device according to claim 3, wherein the temperature control unit (132) is at least partially designed as a cooling unit and is set up to cool the ram cooling zone, wherein the cooling contact surface is cooled when the ram (114) is pressed on.

5. The device according to claim 2, wherein the ram (114) is designed as part of the curing station (130), and/or the temperature control unit (132) is designed at least partially as a heating unit and is set up to heat the stamp heating zone.

6. The apparatus according to claim 5, wherein the curing station (130) further comprises:
a circulation unit (136) on which the ram (114) is arranged, which is set up to press the at least one ram (114) against the received electrode stack (ES) during the conveying of the transport device (110) in order to heat the heat contact surface and to harden the adhesive of the electrode stack (ES) received in the transport device (110).

7. The device according to any one of claims 2 to 6, further comprising:
- an input device (150) arranged along the conveying device (120); and/or
- a output device (160), which is arranged along the conveying device (120);
wherein the input device (150) is set up to feed the at least one electrode stack (ES) to the transport device (110); and/or the output device (160) is set up to feed the at least one electrode stack (ES) away from the transport device (110).

8. The device according to claim 7, wherein the input device (150) and/or the output device (160) are/is designed as a vacuum belt, in particular as an overhead vacuum belt.

9. The device according to claim 7,
wherein the input device (150) further comprises:
- a feed conveying path (152) which conveys the at least one electrode stack (ES) along a feed conveying direction (154) to an input station (156);
and/or the output device (160), which further comprises:
- a removal conveyor path (162) which conveys the at least one electrode stack along a removal conveying direction (164) away from an output station (166).

10. The device according to claim 9, wherein
- the input station (156), which is arranged
downstream of the first heating station (140) and upstream of the curing station (130), or upstream of the curing station (130), is set up to feed the stack of electrodes (ES) to the transport device (110); and/or
- the output station (166), which is arranged
downstream of the curing station (130), is set up to remove the stack of electrodes (ES) from the transport device (110).

11. The device according to claim 10, wherein the transport device (110) is arranged to be fed again upstream of the receiving station (156) or upstream of the first heating station (140) via the conveying device (120).

12. An electrode stack manufacturing apparatus comprising:
the apparatus for curing the electrode stack according to claim 2.

## Revendications

1. Un procédé (200) de durcissement d'un adhésif entre des couches d'électrodes d'un empilement d'électrodes comprend les étapes consistant à:
- Préparation d'un empilement d'électrodes (ES) avec plusieurs couches d'électrodes, entre lesquelles est disposé au moins par zones au moins un adhésif (KS);
- la prise en charge de la pile d'électrodes (ES) par un dispositif de transport (110);
- le transport de la pile d'électrodes (ES) reçue par le dispositif de transport (110) le long d'un chemin de transport (120) vers une station de durcissement (130);
- la mise à disposition d'un poinçon (114) pouvant être tempéré par zones et qui est conçu pour presser contre le dispositif de transport (110) une pile d'électrodes (ES) reçue par le dispositif de transport (110);
- le transport de la pile d'électrodes (ES) reçue par le dispositif de transport (110) à travers la station de durcissement (130), et le durcissement de l'adhésif entre la pluralité de couches d'électrodes dans la station de durcissement (130);
- Retirer le poinçon (114) de la pile d'électrodes (ES);
- Retirer la pile d'électrodes (ES) du dispositif de transport (110).

2. Un dispositif (100) pour durcir un adhésif entre des couches d'électrodes d'un empilement d'électrodes comprend:
- au moins un dispositif de transport (110) avec une palette (112) qui est adaptée pour recevoir et enlever une pile d'électrodes (ES);
- au moins un poinçon (114) qui est destiné et agencé pour presser la pile d'électrodes (ES) reçue par le dispositif de transport (110) contre la palette (112);
- un dispositif de transport (120) qui est destiné et agencé pour recevoir ledit au moins un dispositif de transport (110) et pour le transporter le long d'une direction de transport (122);
- une station de durcissement (130) qui comprend une unité de régulation de température (132), la station de durcissement (130) étant disposée le long du convoyeur (120), et qui est destinée et agencée pour durcir un adhésif;
dans lequel une surface de poinçon du poinçon (114) présente au moins une zone de refroidissement de poinçon et/ou au moins une zone de chauffage de poinçon, et
dans lequel, lors de la pression du poinçon (114), il se forme une surface de contact thermique et/ou une surface de contact de refroidissement avec la pile d'électrodes (ES).

3. Le dispositif selon la revendication 2, dans lequel le poinçon (114) est formé en tant que partie du dispositif de transport (110) et comprend en outre le dispositif (100):
- un premier poste de chauffage (140), qui est disposé le long du dispositif de transport (120) et qui est destiné et agencé pour chauffer le au moins un dispositif de transport (110) ou le poinçon (114) ou la zone de chauffage du poinçon, la surface de contact thermique étant chauffée lors de la pression du poinçon (114).

4. Le dispositif selon la revendication 3, dans lequel l'unité de régulation de température (132) est conçue au moins partiellement comme une unité de refroidissement et est adaptée pour refroidir la zone de refroidissement du poinçon, la surface de contact de refroidissement étant refroidie lors de la pression du poinçon (114).

5. Le dispositif selon la revendication 2, dans lequel le poinçon (114) est réalisé en tant que partie de la station de durcissement (130), et/ou l'unité de mise en température (132) est réalisée au moins partiellement en tant qu'unité de chauffage et est conçue pour chauffer la zone de chauffage du poinçon.

6. Le dispositif selon la revendication 5, dans lequel la station de durcissement (130) comprend en outre:
une unité de circulation (136) sur laquelle est disposé le poinçon (114), qui est conçue pour presser le au moins un poinçon (114) contre la pile d'électrodes (ES) reçue pendant le transport du dispositif de transport (110), afin de chauffer la surface de contact thermique et de durcir la colle de la pile d'électrodes (ES) reçue dans le dispositif de transport (110).

7. Le dispositif selon l'une des revendications 2 à 6 comprenant en outre:
- un dispositif d'entrée (150) disposé le long du convoyeur (120); et/ou
- un dispositif de distribution (160) disposé le long du convoyeur (120);
le dispositif d'entrée (150) étant conçu pour amener la au moins une pile d'électrodes (ES) au dispositif de transport (110); et/ou le dispositif de sortie (160) étant conçu pour éloigner la au moins une pile d'électrodes (ES) du dispositif de transport (110).

8. Le dispositif selon la revendication 7, dans lequel le dispositif d'entrée (150) et/ou le dispositif de sortie (160) est/sont conçu(s) comme une bande à vide, en particulier comme une bande à vide aérienne.

9. Le dispositif selon la revendication 7,
dans lequel le dispositif d'entrée (150) comprend en outre
- un chemin de transport d'alimentation (152) qui transporte la au moins une pile d'électrodes (ES) le long d'une direction de transport d'alimentation (154) vers un poste d'entrée (156);
et/ou le dispositif de distribution (160), qui comprend en outre:
- un chemin de transport de prélèvement (162) qui transporte la au moins une pile d'électrodes le long d'une direction de transport de prélèvement (164) à partir d'un poste de distribution (166).

10. Le dispositif selon la revendication 9, dans lequel
- le poste d'entrée (156), situé en aval du premier poste de chauffage (140) et en amont du poste de durcissement (130), ou en amont du poste de durcissement (130), est agencé pour amener la pile d'électrodes (ES) au dispositif de transport (110); et/ou
- la station de distribution (166), qui est disposée
en aval de la station de durcissement (130), est conçue pour retirer la pile d'électrodes (ES) du dispositif de transport (110).

11. Le dispositif selon la revendication 10, dans lequel le moyen de transport (110) est adapté pour être réalimenté par le moyen de convoyage (120) en amont du poste de réception (156) ou en amont du premier poste de chauffage (140).

12. Un dispositif de fabrication d'un empilement d'électrodes comprenant:
le dispositif de durcissement de l'empilement d'électrodes selon la revendication 2.
